# EUROPEAN PATENT SPECIFICATION

(11) **EP 1 782 297 B1**
(45) Date of publication and mention of the grant of the patent: **29.05.2013**
(21) Application number: 05757421.2
(22) Date of filing: 04.07.2005
(51) Int. Cl.: G06F 17/50

(54) **CRUSH MODELLING**
CRUSH-MODELLIERUNG
MODELISATION D'EMBOUTISSAGES

(30) Priority: 02.07.2004 GB 0414992; 31.08.2004 GB 0419292
(43) Date of publication of application: 09.05.2007
(73) Proprietor: Engenuity Limited, Cuckfield, West Sussex RH17 5HF (GB)
(72) Inventor: COLES, Ian, West Sussex BN15 0EB (GB); BARNES, Graham, Lingfield, Surrey (GB); ROBERTS, Richard, West SussexBN5 9EZ (GB); ANDERSON, James, East Sussex BN2 5JR (GB)
(74) Representative: Samuels, Adrian James
(86) International application number: PCT/GB2005/002627
(87) International publication number: WO 2006/003438

(56) References cited:
- CALISKAN ARI G: "Axial & lateral impact prediction of composite structures using explicit finite element analysis" TRANSP. MAKING TRACKS TOMORROW TRANSP.; TRANSPORTATION: MAKING TRACKS FOR TOMORROW'S TRANSPORTATION 2002, 2002, pages 41-49, XP008060399
- THOMA KLAUS ET AL: "Numerical simulation of a high velocity impact on fiber reinforced materials" NUCL ENG DES; NUCLEAR ENGINEERING AND DESIGN SEP 3 1994, vol. 150, no. 2-3, 3 September 1994 (1994-09-03), pages 441-452, XP008060457
- LI C F ET AL: "Low-velocity impact-induced damage of continuous fiber-reinforced composite laminates. Part I. An FEM numerical model" COMPOSITES PART A: APPLIED SCIENCE AND MANUFACTURING, ELSEVIER SCIENCE PUBLISHERS B.V., AMSTERDAM, NL, vol. 33, no. 8, 1 August 2002 (2002-08-01), pages 1055-1062, XP004379756 ISSN: 1359-835X

## Description

### Field of the Invention

This invention relates to methods, apparatus and software for modelling the behaviour of materials which are crushed particularly, but not exclusively, in the context of composite vehicle body parts under impact.

### Background

It has been recognised for a long time that fiber-reinforced composite materials, particularly carbon fiber composites have great potential for revolutionising the auto industry. It is well known that composites are very light compared to their metal equivalents, even aluminium, and can be formed into complex shapes that can do the same job as many welded metal stampings.

Composites also have the ability to absorb high amounts of energy during impacts which make them ideal for automotive, rail or civil applications. For example, whereas steel can only absorb up to 20 kilojoules per kilogramme and aluminium approximately 30 kilojoules per kilogramme, carbon composites can absorb up to 80 kilojoules per kilogramme.

In addition, unlike metallic structures, the crushed material has very little residual strength after it has absorbed the energy. Instead, the composite material is essentially transformed into small pieces of debris and loosely connected fibres after it has been crushed which means that less space is required than in an equivalent metal structure. This is because in a metal structure space must be provided in designated crumple zones to accommodate the buckled metal.

There is, therefore, a significant incentive to using composite materials such as carbon fiber composites in mass production vehicles. However, to date they have only been used in very limited applications such as top-end sports cars, motor sport and small, non-critical parts of mass produced cars.

Two significant current disadvantages of composites is that they are relatively costly and have long manufacturing cycle times. However, a significant barrier which still remains to their widespread use in the automotive industry is the ability to be able to model their performance in an impact This is of course essential to be able to do in order to design vehicles which are as safe as possible and which will behave in a predictable way in the event of a crash- Although crash performance testing can be carried out by building prototypes, this is extremely expensive and is only practically feasible in the latter stages of design to prove the basic design and calibrate restraint systems. During the earlier stages of design of vehicles made from metal, finite element analysis is used to model the behaviour and interaction of the various metal parts and to predict their performance in the event of an impact. This means that designs can be proposed, tested and modified using computer modelling with much less reliance on producing and testing expensive prototypes.

However, this approach does not currently work for crushable materials such as composites. The reason for this is that composites absorb energy by a very different mechanism to metallic structures. Metallic structures absorb energy by plastic folding of the metal, initiated by local buckling of the material, which can be characterised by a stress vs strain curve to good effect. At limit, final failure, which may be tearing or brittle fracture, results in the element being unable to transfer load, although its initial volume is essential unchanged.

On the microscopic scale however some materials such as composites absorb energy by local crushing of the material, by matrix cracking, fiber buckling and fracture, frictional heating etc. Viewed on a macro scale, the material is essentially crushed or consumed by the impact on a continuous basis, and the volume of the material is reduced as the structural material is turned to debris.

It is widely recognised in the art that no satisfactory way of modelling the crush performance of composite materials exists. Existing finite element analysis techniques as exemplified in "Axial and Laterial Impact Prediction of Composite Structures Using Explicit Finite Element Analysis" Proceedings of International Mechanical Engineering Congress and Exposition November 17-22, 2002 by Ari G. Caliskan tend to treat elements of composite by treating the whole element or separate layers thereof as maintaining their integrity until the appropriate failure stress value is reached, whereafter the element or layer is simply deleted from the analysis or the element or layer is deleted from the analysis in a predefined period. In a typical example, this might result in the element being deleted with only 5% of its original edge length compressed. The conventional finite element calculations essentially cannot deal with very large changes in volume and therefore catastrophically fail the element where in reality the unimpinged volume of material still had a significant capacity to absorb energy. This has the effect that the results of analysis based on such techniques do not correlate satisfactorily with actual experimental results such that they cannot be relied upon to predict the performance of structures e.g. automotives in the event of an impact.

This is clearly a serious drawback of conventional techniques and in practice means that composite materials are not used or in the few cases where they are used, either the structure must be sufficiently over-engineered to ensure the required minimum level of performance, or extensive prototyping and testing is needed in order to assess performance, which is of course unduly time consuming and expensive.

There exists a need, therefore, to be able to predict reliably the performance of composite materials during an impact.

### Summary of the Invention

When viewed from a first aspect the present invention provides a computer-implemented method of determining the impact resistance of a structure as claimed in claim 1.

When viewed from a second aspect the invention provides computer software for executing the method.

When viewed from a further aspect the invention provides a data processing apparatus programmed to execute the method.

The inventors have recognised that the actual failure mode of crushable materials during crush can be approximated as giving an ongoing resistance throughout the continuous consumption of the element or layer at the crush front rather than letting the element or layer as a whole suffer a single rapid failure.

The inventors have realised that the approach in accordance with the invention gives much more reliable and accurate results in circumstances where a material undergoes crush.

It should be appreciated that the resistive force returned for the element or layer is not the peak failure stress but is a somewhat lower value which is calculated from materials theory or determined empirically. To give one specific example, for a typical high strength carbon composite such as T300 in a toughened resin system the compressive failure stress is of the order of 600 Newtons per square millimeter (N/mm²). However, if the material is crushed continually, the resistance to the impactor is of the order of 100 N/mm² i.e. approximately 1/6 of the peak compression strength value.

The invention therefore effectively adds a new failure mode for elements which are determined to be those which in reality will undergo crush - i.e. return a resistance force throughout the consumed length of the element. The crush front may simply be the forward face of the barrier impacting the structure although this is not essential and the crush front could instead be defined elsewhere - e.g. in a fixed relationship relative to the barrier.

The element or layer which is determined to be failing by crushing could be deleted, the ongoing resistance being applied to one or more elements or layers adjacent the deleted element or layer, and/or another load bearing portion of the structure. Preferably the load bearing portion is a portion of the element or layer being crushed itself. For example the element or layer could be resized or redefined (e.g. by splitting), the ongoing resistance being distributed across the or each new element or layer. In both of the foregoing alternatives the barrier is effectively treated as being impenetratable (save possibly for an allowance for minimal penetration to avoid computation difficulties at the boundary). The nodes of the element or layer adjacent to the barrier are therefore prevented from passing through. However both possibilities are to be contrasted with conventional finite element in which analysis rigid barriers are effectively treated as impenetratable and analysis elements or layers are simply compressed against the barrier until the failure stress is reached and the element or layer is deleted with no residual effect.

In presently preferred embodiments of the invention the crush front is allowed to progress across the element or layer so that the space occupied by the element or layer "passes through" the crush front.

The resistance will not in general be a fixed value but rather may be a function of one or more parameters relating to the element or layer. In a preferred example the resistance is a function of the thickness of the element or layer being crushed along the crush front. Additionally or alternatively the resistance is preferably dependent upon the contact area at the crush front. Preferably for a given element the actual value of the resistance force is a constant function of the contact area. In the simplest case the resistance force could be directly proportional to the contact area although this is not essential. Additionally or alternatively where the crushable material is a composite material, the resistance may be determined as a function of the lay-up of the layers of the composite, e.g. the order of the layers.

Furthermore in presently preferred embodiments of the invention the crush resistance is also a function of one or more dynamic parameters relating to the impact such as the velocity and/or angle with which the impactor strikes the element or layer in question or the amount of rotation imparted to it.

The variations with element/layer and/or dynamic parameters may be determined by theory, empirically or both. Even if these variations are determined theoretically, this does not imply that the corresponding base value is so determined and vice versa. In practice it is expected that at least the variation of crush resistance with angle will be empirically determined since this is very dependent upon the weave of a layer or on each of the layers of a composite material.

Preferably a set of finite elements of the structure is designated as being susceptible to crush. The set could comprise all of the elements in the structure. However the Applicant has realised from empirical experience that only a relatively small zone of a composites structure in the immediate vicinity of an impactor will undergo crush. In preferred embodiments therefore only a subset of elements is designated as being susceptible to crush, thereby defining a crush zone. These elements are thus allowed to fail through the novel crushing mode of the present invention and will therefore require data allowing their resistance in this failure mode to be calculated. Elements outside the crush zone will not have the option of failing by crush. However this means that it is not necessary to establish data allowing their failure resistance to be determined. Clearly this is beneficial where empirical data is used to measure the resistance exhibited during crush since it obviates the need to establish data for areas outside the crush zone.

When it is determined in accordance with the invention that a particular finite element is in the crush regime, the conventional finite element analysis is suspended in favour of the novel crush failure mode set out herein. The conventional finite element analysis could simply be suspended - in other words the conventional finite element analysis calculations would simply not be carried out for the particular element or layer. In at least some preferred embodiments however the conventional finite element calculations are also carried out in parallel so that analysis reverts to these in the event that at any the element is calculated to have failed due to another, conventional failure mode such as shear, tensile or interlaminar failure at any point whilst the element is being crushed. To give one example if the crush resistance force gives rise to very large bending forces an element might then fail as a result of tensile stress rather than being crushed.

If the force pushing an element through the crush front is not sufficient to overcome the resistive force calculated in accordance with this invention the element can effectively can move back into conventional finite element analysis. It should be appreciated however that the element could again pass through the crush front at a later stage as dictated by the finite element analysis calculations.

Where analysis reverts to the conventional finite element calculations the element or layer in question may be deemed thereafter not to be capable of being crushed or to have a degraded crush capability. For example the resistance force of the element or layer in question might be reduced, for the purposes of any future crush, in proportion to the amount of it which had previously been 'consumed' during the previous crush phase.

Where, as is preferred, the load bearing portion is a portion of the element or layer being crushed itself, the load bearing portion could be the whole element or layer, i.e. the resistance force could conceivably be applied as a distributed force across the element or layer. However for consistency with normal finite element analysis it is preferred to apply the force to the individual nodes of the element so that the nodes comprise the load bearing portion. In some embodiments the force is divided equally between the nodes. In other embodiments the force may be biased towards one or more of the nodes. The force is preferably divided between nodes that have passed through the crush front and nodes that have not in proportions according to the amount of the element by area or penetration distance that has passed through the crush front. To give an example, if 70% of the element had passed through the crush front, 70% of the calculated force would be applied to the nodes that had not yet passed through.

The crush resistance which the element or layer will be treated as offering may, as mentioned above, be determined using materials theory. However, the internal mechanisms at work during crush are often highly complex. For example in fiber composite materials they depend on *inter alia* fiber type and sizing, the resin properties, the cure cycle and the weave style. This complexity is one reason why attempts to model crush in the past have failed. However, one of the strengths of the present invention is that it is not necessary to calculate or even understand the internal mechanisms responsible since it has been appreciated that for a given set of macroscopic conditions (area of contact with impactor, velocity, angle of impact etc.) the crush resistance is a single macroscopic value. This value may therefore be obtained empirically by performing tests on small samples (known in the art as "coupons") of the material in question which thereafter allows it to be modelled in large, complex structures.

In accordance with the invention an element comprising the entire material thickness could be modelled together or, where the material comprises layers each layer or sub-group of layers could be modelled separately.

In accordance with the invention, a determination is made for analysis elements or layers as to whether or not they are to be treated as undergoing crush. In embodiments preferred for simplicity the determination is made by deciding whether the impactor barrier has physically encroached into the space allocated to a given element or vice versa. In terms of the model this amounts to deciding whether any of the element's nodes have "passed through" the barrier or in other embodiments a crush front defined in another region of the model space. If failure of the element through a conventional failure mode has not already taken place, and the supporting structure has not collapsed, it may then be deduced that the element will undergo crush. In alternative embodiments an explicit calculation is made of the stress or strain on the element which is compared with a threshold failure value. The element is therefore denoted as being crushed if this threshold value is exceeded. However the determination is made if an element is determined to be undergoing crush, the treatment in accordance with the invention is applied.

It will be appreciated that the ability in accordance with the invention to model the behaviour of materials being crushed does not, as has been previously attempted, require drastically reducing the size of the finite elements used in the model which would in any event lead to an inordinately large time or computing power requirement. Rather a practical advantage of using an essentially continuous model of the crush force, as the methods of the present invention may be seen, is to allow element sizes which are the same order of size as would be employed for an equivalent analysis of a metal structure. This is because when an element has been forced into the crush regime, as determined in accordance with the invention, and providing the structure supporting the element in question is capable of withstanding the forces involved, its edge length is no longer compressed against the wall of the impactor or other crush front but is effectively permitted to pass through, subject, of course, to the resistive force on the wall that the projected edge length, thickness and crush resistance stress etc. dictate.

Although in many cases where the principles of the invention are applied the impactor will be a rigid solid object striking the structure, this is not essential and the impactor could comprise another part or body of the structure with sufficient strength and rigidity.

In presently preferred embodiments shell elements are employed although alternatively solid or beam or other elements could be used.

In some embodiments it may be preferred, e.g. for reasons of computational efficiency, that the relative velocity of the impactor wall or crash front and the element in question is taken to be constant during consumption of the element. However, this is not essential and preferably the relative velocity is adjusted during the passage of the crush front through the element. Preferably the resistive force is modified along the length of the element in accordance with a predetermined function of the relative velocity.

The same considerations apply to angle dependence to allow for rotation during consumption of the element. Indeed in general any parameter on which the crush resistance depends may be updated during consumption of the element, another example being the thickness, vibration, temperature etc.

In some preferred embodiments the friction of the crush interface with the barrier or other crush front may be specified. This is advantageous as it can influence whether a given element is stable enough to undergo crush or whether it fails by another mechanism.

Modelling of the effect of an impact of a structure including a crushable materials in accordance with the invention may be carried out without taking damping into account. In some preferred embodiments however damping coefficients are specified which could be internal, external or specified globally by the overall finite element analysis model.

The crushable material comprises a composite material, preferably a fibre-reinforced composite material and more preferably a carbon-fibre reinforced resin.

Although the principles of the invention may be widely applied, e.g. as part of an original analysis model, preferably software implementing the invention is incorporated into an existing finite element modelling package. The type of finite element modelling is preferably non-linear and could be implicit, explicit or another type of analysis mathematics, although explicit non-linear analysis is preferred. In the currently preferred embodiment for example, the software is incorporated into MSC.Dytran (trade mark) explicit non-linear finite element analysis software.

### Brief Description of the Drawings

A preferred embodiment of the present invention will now be described, by way of example only, with reference to the accompanying drawings in which:
Fig. 1 is a schematic flowchart showing the operation of software embodying the present invention;
Fig. 2 is a graph showing resistive force against deflection for a test coupon of a composite material;
Fig. 3 is a graph of deceleration against time for a test cone which underwent an impact under controlled conditions;
Fig.4 shows the sled velocity versus displacement for the experiment of Fig.3;
Fig. 5 shows the predicted deceleration profile is shown in Fig.5; and
Fig. 6 shows the predicted sled velocity.

### Detailed Description of Preferred Embodiments

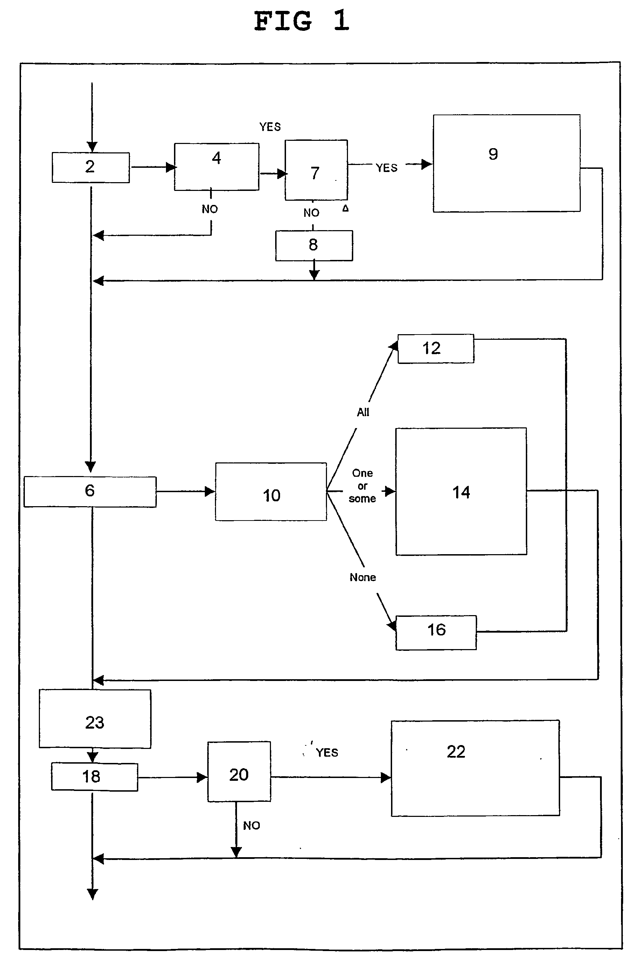

In a preferred embodiment of the invention, software operating in accordance with the principles of the invention is incorporated into MSC.Dytran (trade mark) 2004 finite element analysis package which is available from MSC.Software Inc This known software can be programmed with failure stress values for composite materials and thus for a given finite element of the material can attempt to model the forces on that element until the stress it experiences exceeds the failure stress whereupon the element is deleted. However, in the embodiment of the invention now being described, this part of the functionality of the software is supplemented. Instead, the process shown in Fig. 1 is followed.

In this process, it is first determined, at 2, when there is impact between the defined impactor and an element selected as being capable of crush of the structure. If there is contact, it is determined, at 4, whether any of the nodes of the element have penetrated the impactor. If none of the nodes has penetrated the impactor, the software moves to the next main step at 6 in which the element stress is updated. However, if penetration is detected, the software moves, at 7, to assess whether the element connected to the node is already tagged as undergoing crush. If it is not, the software adds this tag to the node at 8 and then moves on to update the element stress at 6. If the element connected to the node had already been tagged as undergoing crush though, a further series of sub-routines is carried out first at 9. Firstly the contact force is set to zero. Secondly the direction of crush is stored and lastly the relative velocity is stored.

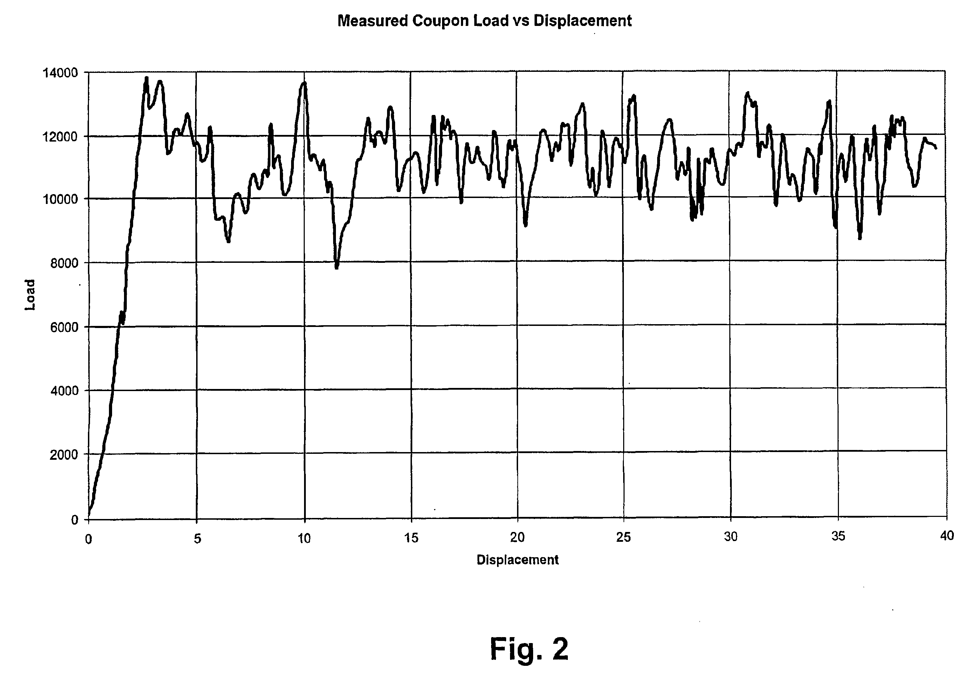

The next main step at 6 is to update the stress on the element. To do this it is determined, at 10, how many of the nodes of the element have been tagged as undergoing crush. If all of the nodes of the element have been tagged, the element is taken to have failed and is therefore removed from further calculations at 12. If one or more, but not all of the nodes is tagged, the software, at 14, projects the crushing direction in the element co-ordinate system to allow determination of the correct direction for material properties to be calculated. It then determines the resistance stress of the element from input data (explained in greater detail below with reference to Fig. 2) and the whole element is tagged as undergoing crush.

Alternatively, if at the assessment step 10 none of the nodes is tagged as undergoing crush, the system simply does nothing, at 16. Whichever of the possibilities 12,14,16 is encountered, the software then moves to 23 where the conventional finite element stress update is undertaken prior to moving on to the third main step of the process in which crushing contact is calculated, at 18.

In this stage, a determination is made, at 20, as to whether the element has been tagged as undergoing crush. If the element has not been tagged, processing continues within the previous conventional analysis mode before returning to the beginning of the process shown in Fig. 1.

However, if the element has been tagged, four actions are taken. Firstly, the intersection between the element and the impactor is calculated. The intersection is calculated to determine the amount of material being crushed. If a triangle is crushed from a vertex, the material being crushed will increase and, as a result, the resistive force will increase as the element is consumed through the barrier. Secondly, the crush direction is obtained, thirdly the crush stress is obtained and finally the crush forces are calculated. Thereafter, processing continues within the previous conventional analysis mode before returning to the beginning of the process shown in Fig. 1.

In order to calculate the predetermined resistance to be fed into the model described above, a small coupon of the relevant composite material is subjected to a crush test. In one example, material sections of 60 x 30 mm are cut from flat plates and bonded to a 50 mm thick honeycomb sandwich in order to promote stabilized crush. The outer edges of each skin presented to the impactor are chamfered at approximately 60° to present a sharp edge to minimize the spike in crush resistance exhibited at the start of crushing and thereby minimize the risk of delamination from the honeycomb at the start of crushing where the initial failure corresponds to the compressive failure performance of the element. The honeycomb cells are oriented perpendicular to the direction of coupon crush and therefore do not absorb significant energy but ensure that the skins do not buckle. A typical plot of resistance force exhibited by a coupon versus deflection (i.e. the amount of the coupon which has been crushed) is shown in Fig. 2. From this it will be seen that throughout most of the range of deflection the force is relatively constant. By taking a suitable average value for this, the resistance force to be used in the analysis model for a particular material may be determined. Since the coupon has a constant cross-sectional area, there is no variation of the resistance force with contact area. However in the model the actual value of the resistance force is calculated as directly proportional to the contact length.

It will be appreciated that this method of coupon testing provides a low cost way of determining the stabilized crush properties for a wide variety of lay-ups configurations and angles. Thus typically such tests would be conducted for each of the material constructions used in the structure to be modelled as crush capable, and optionally each at a range of angles.

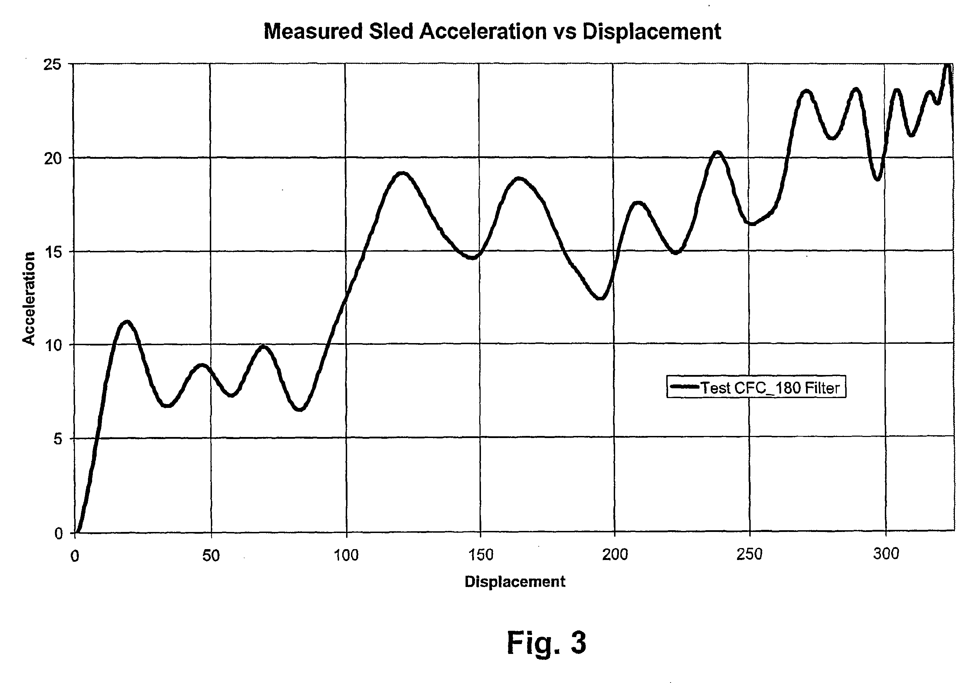

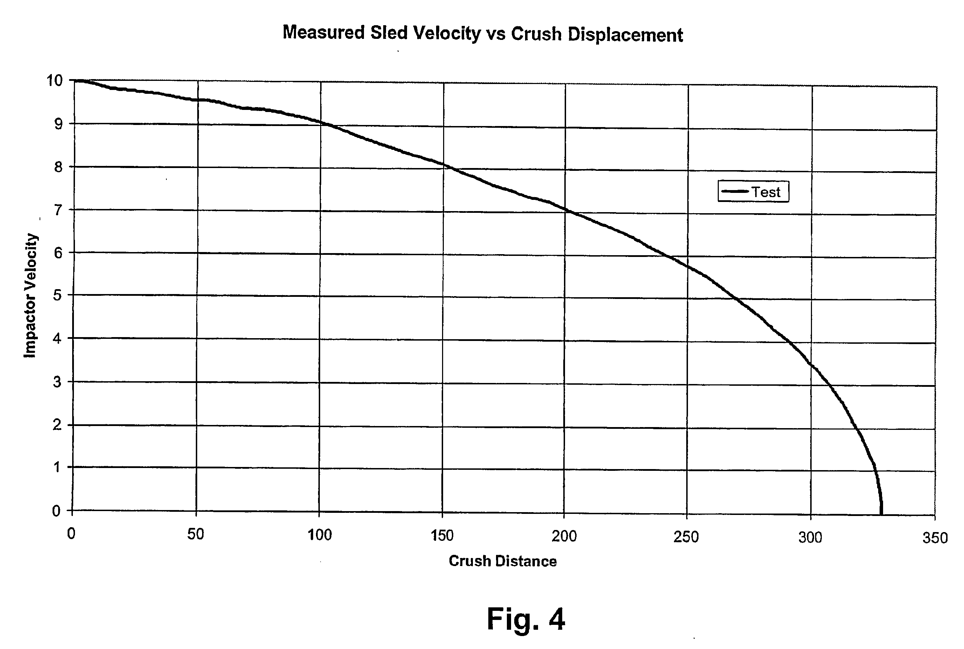

In an exemplary application of the embodiment described, a rectangular-section cone structure of a T300 carbon fibre composite material approximately 85 x 115 mm in section and approximately 455 mm long was mounted on a rigid barrier and a rigid sled is propelled at a controlled velocity into the cone. Fig. 3 shows the measured deceleration of the trolley versus displacement filtered using a Butterworth Order4 low pass filter with upper cut-off frequency of 300Hz in this experiment (impact occurring at Displacement=0). From this the actual resistance force encountered may be calculated simply from the deceleration of the trolley and its mass. Fig.4 shows the sled velocity versus displacement for the same experiment.

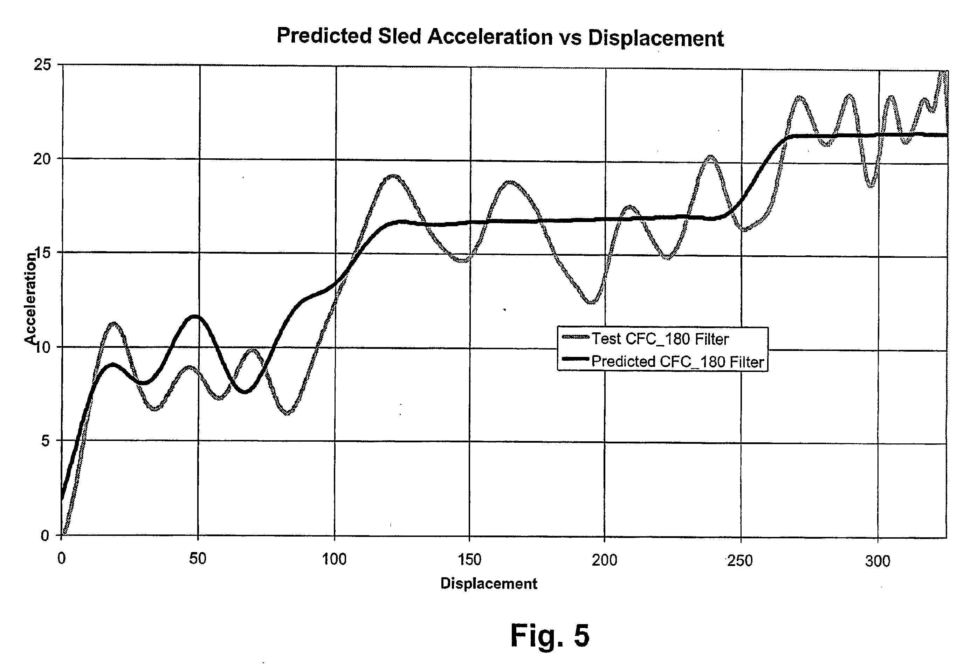

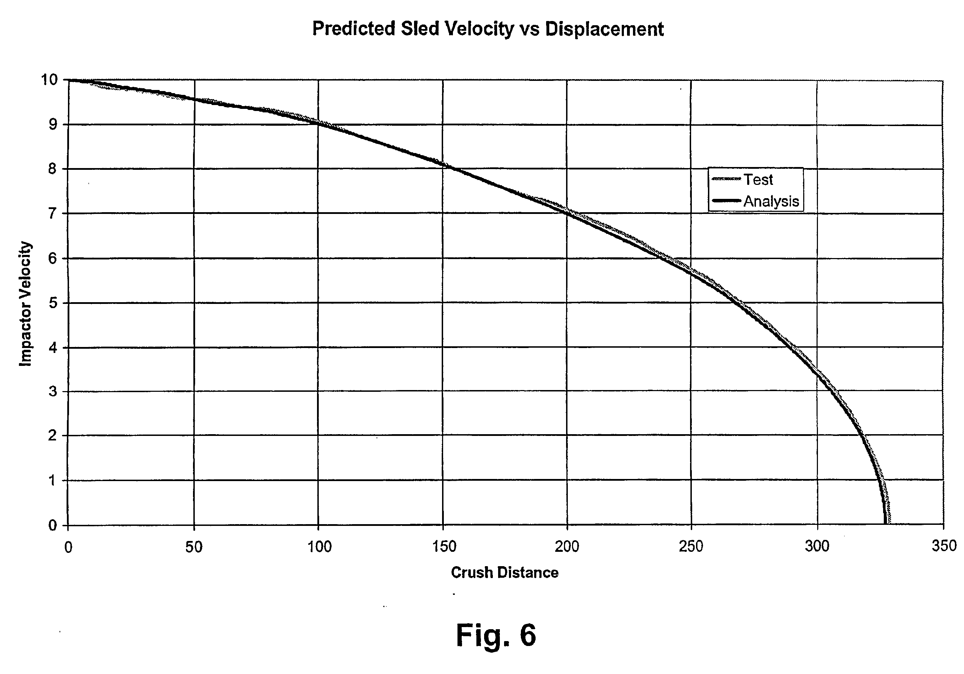

The cone was modelled using Dytran 2004 software modified as described above with reference to Fig. 1. The predicted deceleration profile is shown in Fig.5. filtered in the same manner as the test results, using a Butterworth Order4 low pass filter with upper cut-off frequency of 300Hz. From this it will be seen that the profiles and absolute values of the deceleration are similar. Fig.6 shows the predicted sled velocity and here a remarkable similarity exists between the tested and predicted results. For example, the prediction of the distance taken to bring the trolley to a rest was predicted at 327mm and was measured at 328mm meaning that the prediction was accurate to within 1% percent. This is much more accurate than could be achieved with the prior art methods.

## Claims

1. A computer-implemented method of determining the impact resistance of a structure including a crushable, composite material comprising:
carrying out finite element analysis calculations to determine said impact resistance, the method further comprising the steps of:
determining for one or more layers of a finite element of said material during an impact whether said element or layer thereof is to be treated as failing by crushing; and
if said element or layer is determined so to fail, the method further comprising the steps of:
suspending the finite element analysis calculations for said element or layer,
calculating an ongoing resistance for the element or layer wherein said ongoing resistance is lower than the peak compressive failure stress of the element or layer, and wherein said ongoing resistance is calculated from materials theory or determined empirically such that for a given set of macroscopic conditions comprising area of contact with an impactor, velocity and an angle of impact, the resistance is a single macroscopic value,
defining a load-bearing portion of the structure, and
treating said load-bearing portion for the purpose of subsequent calculations as exhibiting said ongoing resistance throughout the consumed length of the element or layer.

2. A method as claimed in claim 1 wherein said load bearing portion comprises a portion of said element or layer.

3. A method as claimed in claim 2 comprising defining a crush front and allowing said element or layer to pass through said crush front whilst being crushed.

4. A method as claimed in claim 2 or 3 comprising applying said ongoing resistance to individual nodes of the element or layer so that the load bearing portion comprises said nodes.

5. A method as claimed in claim 4 comprising:
defining a crush front and allowing said element or layer to pass through said crush front whilst being crushed; and
dividing said ongoing resistance between nodes that have passed through the crush front and nodes that have not as a function of the amount of the element or layer by area or penetration distance that has passed through the crush front.

6. A method as claimed in claim 5 comprising dividing said ongoing resistance between nodes that have passed through the crush front and nodes that have not in proportions according to the amount of the element or layer by area or penetration distance that has passed through the crush front.

7. A method as claimed in any preceding claim comprising determining whether the element or layer is to be treated as failing by crushing by determining whether an impactor barrier has encroached into a space allocated to said element or layer.

8. A method as claimed in any of claims 1 to 6 comprising determining whether the element or layer is to be treated as failing by crushing by calculating the stress or strain on the element or layer and comparing said stress or strain with a threshold failure value.

9. A method as claimed in any preceding claim comprising defining a crush front and determining said ongoing resistance as a function of a thickness of the element or layer being crushed along the crush front and/or as a function of an area of contact at the crush front.

10. A method as claimed in claim 9 wherein for a given element said ongoing resistance has an actual value which is a constant function of the area of contact.

11. A method as claimed in claim 10 comprising defining said ongoing resistance force as being directly proportional to the area of contact.

12. A method as claimed in any preceding claim wherein said crushable material is a composite material having a plurality of layers, the method comprising determining said ongoing resistance as a function of the lay-up of said layers.

13. A method as claimed in claim 12 comprising determining said ongoing resistance as a function of the order of said layers in the composite and/or as a function of one or more dynamic parameters relating to the impact.

14. A method as claimed in claim 13 comprising determining said ongoing resistance as a function of a velocity and/or an angle at which said element or layer is struck, and/or as a function of an amount of rotation imparted to the element or layer.

15. A method as claimed in any preceding claim comprising the step of designating a set of finite elements of the structure as being susceptible to crush.

16. A method as claimed in claim 15 wherein said set is only a subset of all available elements.

17. A method as claimed in any preceding claim further comprising carrying out finite element calculations in parallel and reverting to said calculations in the event that at any time the element or layer is calculated to have failed due to a non-crushing failure mode.

18. A method as claimed in any preceding claim comprising allocating an element a degraded crush capability for future crush analysis if analysis of said element or layer reverts to finite element analysis.

19. A method as claimed in any preceding claim wherein said finite elements are shell elements, solid elements or beam elements.

20. A method as claimed in any preceding claim comprising defining a crush front and adjusting a relative velocity between an impactor and said element or layer during passage of the crush front through the element.

21. A method as claimed in claim 20 comprising modifying the ongoing resistance along a length of the element in accordance with a predetermined function of the relative velocity.

22. A method as claimed in any preceding claim comprising defining a crush front and adjusting an angle of impact between an impactor and said element or layer during passage of the crush front through the element.

23. A method as claimed in claim 22 comprising modifying the ongoing resistance along a length of the element in accordance with a predetermined function of the angle of impact.

24. A method as claimed in any preceding claim comprising defining a crush front and specifying a friction of the element or layer with the crush front.

25. A method as claimed in any preceding claim comprising specifying material damping coefficients.

26. A method as claimed in any preceding claim wherein said crushable material comprises a composite material, preferably a fiber-reinforced composite material, more preferably a carbon-fiber reinforced resin.

27. A computer readable medium comprising computer software which when executed on a computer executes a method as claimed in any preceding claim.

28. A data processing apparatus programmed to execute the method of any of claims 1 to 26.

## Patentansprüche

1. Computer-implementiertes Verfahren zum Bestimmen der Aufprallfestigkeit einer Struktur, die ein knautschfähiges Verbundmaterial enthält, wobei das Verfahren Folgendes umfasst:
Ausführen von Finite-Elemente-Analyse-Berechnungen, um die Aufprallfestigkeit zu bestimmen, wobei das Verfahren des Weiteren folgende Schritte umfasst:
Bestimmen, für eine oder mehrere Schichten eines finiten Elements des Materials während eines Aufpralls, ob das Element oder seine Schicht als "zerstört durch Zerknautschen" zu behandeln ist; und
wenn festgestellt wird, dass das Element oder die Schicht auf diese Weise zerstört wurde, so umfasst das Verfahren des Weiteren folgende Schritte:
Aussetzen der Finite-Elemente-Analyse-Berechnungen für das Element oder die Schicht,
Berechnen eines laufenden Widerstands für das Element oder die Schicht, wobei der laufende Widerstand kleiner als die Spitzen-Druckbruchlast des Elements oder der Schicht ist, und wobei der laufende Widerstand anhand der Werkstofftheorie berechnet oder empirisch ermittelt wird, dergestalt, dass für einen bestimmten Satz makroskopischer Bedingungen, die eine Fläche des Kontakts mit einem aufprallenden Objekt, Geschwindigkeit und einen Winkel des Aufpralls umfassen, der Widerstand ein einzelner makroskopischer Wert ist,
Definieren eines lasttragenden Abschnitts der Struktur, und
Behandeln des lasttragenden Abschnitts zum Zweck anschließender Berechnungen in einer solchen Weise, als wiese er den laufenden Widerstand über die gesamte aufgezehrte Länge des Elements oder der Schicht auf.

2. Verfahren nach Anspruch 1, wobei der lasttragende Abschnitt einen Abschnitt des Elements oder der Schicht umfasst.

3. Verfahren nach Anspruch 2, das Folgendes umfasst: Definieren einer Knautschfront, und Erlauben, dass sich das Element oder die Schicht durch die Knautschfront hindurch bewegt, während sie zerknautscht wird.

4. Verfahren nach Anspruch 2 oder 3, das Folgendes umfasst:
Anlegen des laufenden Widerstands an individuelle Knoten des Elements oder der Schicht, so dass der lasttragende Abschnitt die Knoten umfasst.

5. Verfahren nach Anspruch 4, das Folgendes umfasst:
Definieren einer Knautschfront und Erlauben, dass sich das Element oder die Schicht durch die Knautschfront hindurch bewegt, während sie zerknautscht wird; und
Teilen des laufenden Widerstands zwischen Knoten, die sich durch die Knautschfront hindurch bewegt haben, und Knoten, die sich nicht durch die Knautschfront hindurch bewegt haben, als eine Funktion des Betrages des Elements oder der Schicht nach Fläche oder Eindringdistanz, der sich durch die Knautschfront hindurch bewegt hat.

6. Verfahren nach Anspruch 5, das Folgendes umfasst: Teilen des laufenden Widerstands zwischen Knoten, die sich durch die Knautschfront hindurch bewegt haben, und Knoten, die sich nicht durch die Knautschfront hindurch bewegt haben, proportional entsprechend dem Betrag des Elements oder der Schicht nach Fläche oder Eindringdistanz, der sich durch die Knautschfront hindurch bewegt hat.

7. Verfahren nach einem der vorangehenden Ansprüche, das Folgendes umfasst: Feststellen, ob das Element oder die Schicht als "zerstört durch Zerknautschen" zu behandeln ist, durch Feststellen, ob eine Aufprallbarriere in einen Raum eingedrungen ist, der dem Element oder der Schicht zugeordnet ist.

8. Verfahren nach einem der Ansprüche 1 bis 6, das Folgendes umfasst: Feststellen, ob das Element oder die Schicht als "zerstört durch Zerknautschen" zu behandeln ist, durch Berechnen der Spannung oder Dehnung an dem Element oder der Schicht und Vergleichen der Spannung oder Dehnung mit einem Schwellen-Bruchwert.

9. Verfahren nach einem der vorangehenden Ansprüche, das Folgendes umfasst: Definieren einer Knautschfront und Bestimmen des laufenden Widerstands als eine Funktion einer Dicke des Elements oder der Schicht, die entlang der Knautschfront zerknautscht wird, und/oder als eine Funktion einer Kontaktfläche an der Knautschfront.

10. Verfahren nach Anspruch 9, wobei der laufende Widerstand für ein bestimmtes Element einen Ist-Wert hat, der eine konstante Funktion der Kontaktfläche ist.

11. Verfahren nach Anspruch 10, das Folgendes umfasst: Definieren der laufenden Widerstandskraft als direkt proportional zu der Kontaktfläche.

12. Verfahren nach einem der vorangehenden Ansprüche, wobei das knautschfähige Material ein Verbundmaterial ist, das mehrere Schichten hat, das Verfahren Folgendes umfasst: Bestimmen des laufenden Widerstands als eine Funktion des Aufbaus der Schichten.

13. Verfahren nach Anspruch 12, das Folgendes umfasst: Bestimmen des laufenden Widerstands als eine Funktion der Reihenfolge der Schichten in dem Verbund und/oder als eine Funktion eines oder mehrerer dynamischer Parameter, die mit dem Aufprall in Beziehung stehen.

14. Verfahren nach Anspruch 13, das Folgendes umfasst: Bestimmen des laufenden Widerstands als eine Funktion einer Geschwindigkeit und/oder eines Winkels, mit der bzw. in dem das Element oder die Schicht getroffen wird, und/oder als eine Funktion eines Betrages einer Drehbewegung, die dem Element oder der Schicht verliehen wird.

15. Verfahren nach einem der vorangehenden Ansprüche, das folgenden Schritt umfasst: Bezeichnen eines Satzes finiter Elemente der Struktur als knautschanfällig.

16. Verfahren nach Anspruch 15, wobei der Satz nur eine Teilmenge aller verfügbaren Elemente ist.

17. Verfahren nach einem der vorangehenden Ansprüche, das des Weiteren Folgendes umfasst: paralleles Ausführen von Finite-Elemente-Berechnungen und Zurückkehren zu den Berechnungen in dem Fall, dass eine Berechnung des Element oder der Schicht zu irgend einer Zeit ergibt, das es bzw. sie infolge eines Nicht-Knautsch-Modus zerstört wurde.

18. Verfahren nach einem der vorangehenden Ansprüche, das Folgendes umfasst: Zuweisen einer verschlechterten Knautschfähigkeit zu einem Element für eine künftige Knautschanalyse, wenn die Analyse des Elements oder der Schicht zur Finite-Elemente-Analyse zurückkehrt.

19. Verfahren nach einem der vorangehenden Ansprüche, wobei die finiten Elemente Schalenelemente, massive Elemente oder Balkenelemente sind.

20. Verfahren nach einem der vorangehenden Ansprüche, das Folgendes umfasst: Definieren einer Knautschfront und Einstellen einer relativen Geschwindigkeit zwischen einem aufprallenden Objekt und dem Element oder der Schicht während des Durchgangs der Knautschfront durch das Element.

21. Verfahren nach Anspruch 20, das Folgendes umfasst: Modifizieren des laufenden Widerstands entlang einer Länge des Elements gemäß einer zuvor festgelegten Funktion der relativen Geschwindigkeit.

22. Verfahren nach einem der vorangehenden Ansprüche, das Folgendes umfasst: Definieren einer Knautschfront und Einstellen eines Winkels des Aufpralls zwischen einem aufprallenden Objekt und dem Element oder der Schicht während des Durchgangs der Knautschfront durch das Element.

23. Verfahren nach Anspruch 22, das Folgendes umfasst: Modifizieren des laufenden Widerstands entlang einer Länge des Elements gemäß einer zuvor festgelegten Funktion des Aufprallwinkels.

24. Verfahren nach einem der vorangehenden Ansprüche, das Folgendes umfasst: Definieren einer Knautschfront und Spezifizieren einer Reibung des Elements oder der Schicht mit der Knautschfront.

25. Verfahren nach einem der vorangehenden Ansprüche, welches das Spezifizieren von Materialdämpfungskoeffizienten umfasst.

26. Verfahren nach einem der vorangehenden Ansprüche, wobei das knautschfähige Material ein Verbundmaterial, bevorzugt ein faserverstärktes Verbundmaterial, besonders bevorzugt ein kohlefaserverstärktes Harz umfasst.

27. Computerlesbares Medium, das Computersoftware umfasst, die, wenn sie auf einem Computer ausgeführt wird, ein Verfahren nach einem der vorangehenden Ansprüche ausführt.

28. Datenverarbeitungsvorrichtung, die dafür programmiert ist, das Verfahren nach einem der Ansprüche 1 bis 26 auszuführen.

## Revendications

1. Procédé mis en oeuvre par ordinateur pour déterminer la résistance au choc d'une structure incluant une matière composite pouvant être écrasée, comprenant :
l'exécution de calculs d'analyse par éléments finis pour déterminer ladite résistance au choc, le procédé comprenant en outre les étapes de :
détermination pour une ou plusieurs couches d'un élément fini de ladite matière pendant un choc si ledit élément ou couche de celle-ci doit être traité comme échouant à l'écrasement ; et
si ledit élément ou couche est ainsi déterminé comme échouant, le procédé comprenant en outre les étapes de :
suspension des calculs d'analyse par éléments finis pour ledit élément ou couche,
calcul d'une résistance continue pour l'élément ou la couche dans lequel ladite résistance continue est inférieure à la contrainte de défaillance en compression maximale de l'élément ou couche, et dans lequel ladite résistance continue est calculée à partir de la théorie des matériaux ou est déterminée de façon empirique de sorte que pour un ensemble donné de conditions macroscopiques comprenant une surface de contact avec un impacteur, une vitesse et un angle de choc, la résistance est une valeur macroscopique unique,
définition d'une partie portant la charge de la structure, et
traitement de ladite partie portant la charge dans le but de calculs suivants comme présentant ladite résistance continue tout au long de la longueur consommée de l'élément ou couche.

2. Procédé selon la revendication 1, dans lequel ladite partie portant la charge comprend une partie dudit élément ou couche.

3. Procédé selon la revendication 2 comprenant la définition d'un front d'écrasement et l'autorisation dudit élément ou couche à passer à travers ledit front d'écrasement tout en étant écrasé.

4. Procédé selon la revendication 2 ou 3 comprenant l'application de ladite résistance continue à des noeuds individuels de l'élément ou couche de sorte que la partie portant la charge comprend lesdits noeuds.

5. Procédé selon la revendication 4 comprenant :
la définition d'un front d'écrasement et l'autorisation dudit élément ou couche à passer à travers ledit front d'écrasement tout en étant écrasé ;
et
la division de ladite résistance continue entre des noeuds qui sont passés à travers le front d'écrasement et des noeuds qui ne le sont pas en tant que fonction de la quantité de l'élément ou couche par surface ou distance de pénétration qui est passé à travers le front d'écrasement.

6. Procédé selon la revendication 5 comprenant la division de ladite résistance continue entre des noeuds qui sont passés à travers le front d'écrasement et des noeuds qui ne le sont pas dans des proportions selon la quantité de l'élément ou couche par surface ou distance de pénétration qui est passée à travers le front d'écrasement.

7. Procédé selon l'une quelconque des revendications précédentes comprenant la détermination si l'élément ou couche doit être traité comme échouant à l'écrasement en déterminant si une barrière d'impacteur a empiété dans un espace attribué audit élément ou couche.

8. Procédé selon l'une quelconque des revendications 1 à 6, comprenant la détermination si l'élément ou couche doit être traité comme échouant à l'écrasement en calculant la contrainte ou la déformation sur l'élément ou couche et en comparant ladite contrainte ou déformation à une valeur de seuil de défaillance.

9. Procédé selon l'une quelconque des revendications précédentes comprenant la définition d'un front d'écrasement et la détermination de ladite résistance continue comme une fonction d'une épaisseur de l'élément ou couche étant écrasé le long du front d'écrasement et/ou comme une fonction d'une surface de contact au niveau du front d'écrasement.

10. Procédé selon la revendication 9, dans lequel, pour un élément donné, ladite résistance continue a une valeur réelle qui est une fonction constante de la zone de contact.

11. Procédé selon la revendication 10 comprenant la définition de ladite force de résistance continue comme étant directement proportionnelle à la surface de contact.

12. Procédé selon l'une quelconque des revendications précédentes, dans lequel ladite matière pouvant être écrasée est une matière composite ayant une pluralité de couches, le procédé comprenant la détermination de ladite résistance continue comme une fonction de l'empilage desdites couches.

13. Procédé selon la revendication 12 comprenant la détermination de ladite résistance continue comme une fonction de l'ordre desdites couches dans le composite et/ou comme une fonction d'un ou plusieurs paramètres dynamiques se rapportant au choc.

14. Procédé selon la revendication 13 comprenant la détermination de ladite résistance continue comme une fonction d'une vitesse et/ou d'un angle auquel ledit élément ou couche est frappé, et/ou comme une fonction d'une quantité de rotation communiquée à l'élément ou couche.

15. Procédé selon l'une quelconque des revendications précédentes comprenant l'étape de désignation d'un ensemble d'éléments finis de la structure comme étant susceptible d'écrasement.

16. Procédé selon la revendication 15, dans lequel ledit ensemble est seulement un sous-ensemble de tous les éléments disponibles.

17. Procédé selon l'une quelconque des revendications précédentes, comprenant en outre l'exécution de calculs par éléments finis en parallèle et le retour auxdits calculs au cas où à tout moment l'élément ou couche est calculé comme ayant échoué en raison d'un mode de défaillance de non-écrasement.

18. Procédé selon l'une quelconque des revendications précédentes, comprenant l'attribution à un élément d'une capacité d'écrasement dégradée pour une future analyse d'écrasement si l'analyse dudit élément ou couche revient à l'analyse par éléments finis.

19. Procédé selon l'une quelconque des revendications précédentes, dans lequel lesdits éléments finis sont des éléments d'enveloppe, des éléments solides ou des éléments de poutrelle.

20. Procédé selon l'une quelconque des revendications précédentes, comprenant la définition d'un front d'écrasement et le réglage d'une vitesse relative entre un impacteur et ledit élément ou couche pendant le passage du front d'écrasement à travers l'élément.

21. Procédé selon la revendication 20 comprenant la modification de la résistance continue le long d'une longueur de l'élément selon une fonction prédéterminée de la vitesse relative.

22. Procédé selon l'une quelconque des revendications précédentes comprenant la définition d'un front d'écrasement et le réglage d'un angle de choc entre un impacteur et ledit élément ou couche pendant le passage du front d'écrasement à travers l'élément.

23. Procédé selon la revendication 22 comprenant la modification de la résistance continue le long d'une longueur de l'élément selon une fonction prédéterminée de l'angle de choc.

24. Procédé selon l'une quelconque des revendications précédentes comprenant la définition d'un front d'écrasement et la spécification d'une friction de l'élément ou couche avec le front d'écrasement.

25. Procédé selon l'une quelconque des revendications précédentes comprenant la spécification de coefficients d'amortissement de matière.

26. Procédé selon l'une quelconque des revendications précédentes, dans lequel ladite matière pouvant être écrasée comprend une matière composite, de préférence une matière composite renforcée de fibres, plus de préférence une résine renforcée de fibres de carbone.

27. Support lisible par ordinateur comprenant un logiciel informatique qui, lorsqu'il est exécuté sur un ordinateur exécute un procédé selon l'une quelconque des revendications précédentes.

28. Appareil de traitement de données programmé pour exécuter le procédé selon l'une quelconque des revendications 1 à 26.
